# EUROPÄISCHE PATENTANMELDUNG

(11) **EP 1 710 545 A1**
(43) Veröffentlichungstag der Anmeldung: **11.10.2006**
(21) Anmeldenummer: 05007636.3
(22) Anmeldetag: 07.04.2005
(51) Int. Cl.: G01F 15/10, G01L 19/06, G01F 1/58, G01D 11/24, G01D 3/08

(54) **Messaufnehmer mit Überdruckschutzvorrichtung**

(71) Anmelder: Endress + Hauser Flowtec AG, 4153 Reinach/BL (CH)
(72) Erfinder: Moser, Thierry, 68510 Sierentz (FR); Burczyk, Dietfried, 14512 Teltow (DE); Dannhauer, Wolfgang, 14513 Teltow (DE); Graf, Oliver, 4447 Känerkinden (CH); Nürnberger, Ralf, 14473 Potsdam (DE); Erni, Raphael, 4142 Musckenstein (CH); Müth, Stefan, 79650 Schopheim (DE)
(74) Vertreter: Andres, Angelika Maria

(57) **Zusammenfassung**

Es ist ein ein hohes Maß an Sicherheit bietender Messaufnehmer, vorgesehen, mit einem Messaufnehmergehäuse (1, 57), einem in dem Messaufnehmer angeordneten Sensorelement (9, 61, 99), mindestens einem das Messaufnehmergehäuse (1, 57) abschließenden Anschlusselement (5, 77, 101), und einer im Anschlusselement (5, 77) integrierten Überdruckschutzvorrichtung (33, 103), insb. einer Berstscheibe (37, 85) oder einem Überlastventil, die dazu dient, im Falle eines Überdrucks im Messaufnehmer einen Druckausgleich mit einer Umgebung des Messaufnehmers herbeizuführen.

## Beschreibung

Die Erfindung betrifft einen Messaufnehmer mit einem Messaufnehmergehäuse, einem in dem Messaufnehmer angeordneten Sensorelement und mindestens einem das Messaufnehmergehäuse abschließenden Anschlusselement.

In der industriellen Prozeß-Meßtechnik werden zur Erzeugung von analogen oder digitalen Prozeß-Meßgrößen repräsentierenden Meßsignalen, insb. auch im Zusammenhang mit der Automatisierung chemischer oder verfahrenstechnischer Prozesse, vor Ort Prozeß-Meßgeräte, sogenannte Feldmeßgeräte eingesetzt. Bei den zu erfassenden Prozeß-Meßgrößen kann es sich z.B. um einen Massendurchfluß, einen Füll- oder einen Grenzstand, einen Druck oder eine Temperatur, handeln. Derartige Feldmeßgeräte sind beispielsweise in der EP-A 984 248, US-A 38 78 725, US-A 43 08 754, US-A 44 68 971, US-A 45 74 328, US-A 45 94 584, US-A 46 17 607, US-A 47 16 770, US-A 48 50 213, US-A 50 52 230, US-A 51 31 279, US-A 53 63 341, US-A 57 96 011, US-B 62 36 322, US-B 63 97 683 oder der WO-A 00 36 379 beschrieben.

Zum Erfassen einer oder mehrerer Prozeß-Meßgrößen weist das Meßgerät einen entsprechenden, zumeist physikalisch-elektrischen Meßaufnehmer auf, der in eine Wandung eines ein entsprechendes, z.B. flüssiges, pulver-, dampf- oder gasförmiges, Prozeß-Medium führenden Behälters, z.B. eine Rohrleitung oder einen Tank, eingesetzt ist und der dazu dient, wenigstens ein die erfaßte Prozeß-Meßgröße repräsentierendes, insb. elektrisches, Meßsignal zu erzeugen.

Darüber hinaus ist der Meßaufnehmer mit einer entsprechenden, insb. auch einer Weiterverarbeitung oder Auswertung des wenigstens einen Meßsignals dienenden, Meß- und Betriebselektronik - oder kurz Meßgerät-Elektronik - elektrisch verbunden. Die Meßgerät-Elektronik ist bei den meisten Messgeräten in unmittelbarer Nähe des Meßaufnehmers angeordnet. Zudem sind Feldgeräte der beschriebenen Art zumeist auch über ein an die Meßgerät-Elektronik angeschlossenes Datenübertragungs-System miteinander und/oder mit entsprechenden Prozeß-Leitrechnern verbunden, wohin sie die Meßsignale z.B. via (4 mA bis 20 mA)-Stromschleife und/oder via digitalen Daten-Bus senden. Als Datenübertragungs-Systeme dienen hierbei, insb. serielle, Feldbus-Systeme, wie z.B. PROFIBUS-PA, FOUNDATION FIELDBUS sowie die entsprechenden Übertragungs-Protokolle. Mittels der Prozeß-Leitrechner können die übertragenen Meßsignale weiterverarbeitet und als entsprechende Meßergebnisse z.B. auf Monitoren visualisiert und/oder in Steuersignale für Prozeß-Stellglieder, wie z.B. Magnet-Ventile, Elektro-Motoren etc., umgewandelt werden.

Zur Aufnahme der Meßgerät-Elektronik umfassen Prozeß-Meßgeräte der beschriebenene Art ein Elektronik-Gehäuse, das, wie z.B. in der US-A 63 97 683 oder der WO-A 00 36 379 vorgeschlagen, vom Felmeßgerät entfernt angeordnet und mit diesem nur über eine flexible Leitung verbunden sein kann Üblicherweise jedoch ist die Meßgerät-Elektronik in einem entsprechenden Elektronikgehäuse des Meßgeräts untergebracht, das, wie z.B. auch in der EP-A 903 651 oder der EP-A 1 008 836 gezeigt, über ein zumeist hals- oder stutzenförmiges oder auch nur als einfache Flanschverbindung ausgebildetes Anschlusselement direkt an den Meßaufnehmer montiert ist. Oftmals dient dann das Elektronik-Gehäuse, wie beispielsweise in der EP-A 984 248, der US-A 45 94 584; der US-A 47 16 770 oder der US-A 63 52 000 gezeigt, auch dazu, einige mechanische Komponenten des Meßaufnehmers mit aufzunehmen, wie z.B. sich unter mechanischer Einwirkung betriebsmäßig verformende membran-, stab- oder hülsenförmige Deformation- oder Vibrationskörper. Zum elektrischen Verbinden von Meß- und Betriebselektronik und Meßaufnehmer sind ferner durch das Anschlusselement hindurch verlegte Anschlußleitungen vorgesehen, die zumeist von einem das Anschlußelement zumindest teilweise ausfüllenden Dichtungsmaterial, beispielsweise Kunststoff und/oder Glas, abschnittsweise eingebettet sind.

Der Vorteil einer direkten, insb. auch starren, mechanischen Verbindung zwischen Elektronik-Gehäuse und Meßaufnehmer ist vor allem darin zu sehen, daß vor Ort nach dem Einbau des Meßaufnehmers praktisch kein weiteren Montageschritte für die Fixierung des Elektronik-Gehäuses erforderlich sind.

Messgeräte der beschriebenen Art müssen in der Industrie hohen in der Regel national durch entsprechende Sicherheitsvorschriften fest vorgeschriebenen Sicherheitsstandards genügen, damit sowohl im normalen Betrieb als auch bei einem auftretenden Störfall ein hohes Maß an Sicherheit für Personen und Anlagen gewährleistet ist. Ein wichtiger Aspekt besteht darin, Gehäuse, die im Betrieb bzw. durch einen Störfall einem Druck bzw. einem Überdruck ausgesetzt sein können entsprechend sicher auszubilden. Druck- bzw. Differenzdruckmessaufnehmer müssen beispielsweise bei einwirkenden Drücken bis zum zweifachen eines aufnehmer-spezifischen Nenndrucks druckdicht sein. Der Nenndruck ist ein oberer Grenzwert für einen auf den Messaufnehmer einwirkenden Druck, für den der Druck- bzw. Differenzdruckmessaufnehmer ausgelegt ist. Bauteile, wie zum Beispiel Anschlusselemente, insb. Flansche, und Schrauben müssen sogar Drücken bis zu einem dreifachen des Nenndrucks standhalten. Beim dreifachen Nenndruck sind kleinere Lecks an Dichtstellen jedoch hinnehmbar. In der Regel werden die Bauteile der Messaufnehmer jedoch bei einer Belastung mit dem dreifachen des Nenndrucks irreversibel geschädigt. Eine solche irreversible Schädigung tritt z.B. dann ein, wenn Bauteile, wie z.B. Flansche oder Schrauben überdehnt werden. Die betroffenen Bauteile müssen dann ausgewechselt werden. Um dies zu verhindern ist es üblich in Anlagen Sicherheitsventile oder Berstscheiben vorzusehen, die bei Überschreitung eines vorgegebenen Druckes öffnen und eine weitere Druckerhöhung verhindern. Grundlegende Anforderungen hierzu sind z.B. in den Technischen Regeln für Druckgase (TRG 250 und 254) aufgeführt und finden bei sogenannten unschädlichen Gasen, z.B. bei Inertgasen oder Kohlendioxid, sowie bei Flüssigkeiten Anwendung.

Eine derartige in einer Anlage dem Messaufnehmer vorgeschaltete Überdruckschutzvorrichtung ist jedoch nicht auf die Erfordernisse des jeweiligen Messaufnehmers abgestimmt und reagiert oft auf dynamische Überlastungen zu träge. Bei rapiden Druckanstiegen kann es somit trotz der vorgeschalteten Überdruckschutzvorrichtung zu irreversiblen Schädigungen des Messaufnehmers kommen. Hinzu kommt, dass hinsichtlich des Einbaus der vorgeschalteten Überdruckschutzvorrichtung Fehlerquellen bestehen, z.B. indem die Überdruckschutzvorrichtung gar nicht eingebaut wird, oder versehentlich eine Überdruckschutzvorrichtung eingesetzt wird, die schon bei Drücken unterhalb des Nenndrucks öffnet bzw. bei Drücken oberhalb des dreifachen Nenndrucks noch nicht öffnet.

Auch bei Durchflussmessgeräten besteht in der Regel die Notwendigkeit das Messaufnehmergehäuse druckfest auszubilden. Dort ist das Messaufnehmergehäuse ein Mantelrohr in dem ein Messrohr verläuft. Das Medium, dessen Durchfluss zu erfassen ist, durchströmt im Betrieb das Messrohr. Bei magnetisch-induktiven Durchflussmessgeräten sind am Messrohr Spulen zur Erzeugung eines Magnetfeldes im Inneren des Messrohres und Elektroden zum Abgreifen einer durch einen Durchfluss eines leitfähigen Mediums durch das Magnetfeld erzeugten Induktionsspannung vorgesehen. Im normalen Betrieb treten in dem Mantelrohr keine hohen Drücke auf. Es kann jedoch im Störfall, z.B. bei einer Beschädigung des Messrohres oder einer Beschädigung von Zuleitungen, zu Druckanstiegen im Mantelrohr kommen. Um hier eine entsprechende Sicherheit zu gewährleisten ist es erforderlich, das Mantelrohr druckfest auszubilden. Dies ist jedoch mit erhöhten Kosten verbunden. Eine Vorschaltung einer Überdruckschutzvorrichtung, wie sie in der Druckmesstechnik üblicherweise verwendet wird, ist in der Regel aufgrund der Bauform der Durchflussmessaufnehmer nicht einsetzbar. Das oben Gesagte gilt analog auch für andere Arten von Durchflussmessaufnehmern, z.B. Vortex-, Coriolis-, Ultraschall-Durchflussmessgeräte oder thermische Durchflussmesser. Auch bei einer druckfesten Ausbildung des Mantelrohres können, insb. bei Störfällen bei denen hohe und/oder schnelle Druckanstiege auftreten, irreversible Schädigungen der Bauteile, z.B. des Mantelrohres oder der Schrauben und Flansche, auftreten, die einen Austausch der entsprechenden Bauteile erforderlich machen.

Im Falle eines Überdrucks ist aber nicht nur der Messaufnehmer selbst gefährdet. Es besteht zusätzlich die Gefahr, das ein den Überdruck bewirkendes Medium unkontrolliert austritt. Gerade auf großen Anlagen, in denen viele Messgeräte mit Messaufnehmern eingesetzt werden, besteht häufig ein weit verzweigtes Kabelrohrleitungssystem, über das die einzelnen Meß- und Betriebselektroniken, wie beispielsweise auch in der WO-A 03/040851 gezeigt, an übergeordnete und zumeist in entfernten Warten aufgestellten Prozeßleitsystemen angeschlossen werden. In solchen Anlagen können insb. gas- und/oder dampfförmige Medien im Falle eines Überdrucks unter Umständen durch das Anschlusselement und das Elektronikgehäuse hindurch in das weit verzweigte Kabelrohrleitungssystem gelangen und sich völlig unkontrolliert in der Anlage ausbreiten. Während in der Umgebung des Messaufnehmers auf die verwendeten Medien zugeschnittene Sicherheitsvorkehrungen gelten, ist dies in entfernteren Bereichen nicht zwingend der Fall. Ein solches unkontrolliertes Entweichen von, insb. und/oder dampfförmigem, Medium stellt somit ein hohes Sicherheitsrisiko dar. Bei dem in der WO-A 03/040851 gezeigten Meßgerät wird im Fall eines solchen Fehlers ein entsprechendes Alarmsignal erzeugt. Das Weiterleiten des Mediums in die Warte kann auf diese Weise jedoch weder verhindert noch zeitnah unterbunden werden.

Es ist eine Aufgabe der Erfindung einen Meßaufnehmer bzw. Meßgerät der beschriebenen Art dahingehend zu verbessern, daß sie ein möglichst hohes Maß an Sicherheit auch für entfernte Warten bieten.

Hierzu besteht die Erfindung in einem Meßaufnehmer, insb. einem Druckaufnehmer oder einem in den Verlauf einer Rohrleitung einsetzbaren Durchflußaufnehmer für strömende Medien, mit einem Messaufnehmergehäuse, einem in dem Messaufnehmer angeordneten Sensorelement, mindestens einem am Messaufnehmergehäuse fixierten, insb. hals- und/oder stutzenförmig ausgebildeten, Anschlußelement für eine mit dem Sensorelement elektrisch verbindbare Meß- und Betriebselektronik, sowie einer im Anschlusselement angeordneten Überdruckschutzvorrichtung, insb. einer Berstscheibe oder einem Überlastventil, die mit einem Lumen des Messaufnehmergehäuse kommuniziert und die dazu dient, im Falle eines Überdrucks im Messaufnehmer einen Druckausgleich mit einer Umgebung des Messaufnehmers herbeizuführen. Darüber hinaus besteht die Erfindung auch in einem, insb. als Durchflußmeßgerät, als Druckmeßgerät, als Füllstandsmeßgerät und/oder als Füllstandsgrenzschalter ausgebildeten, Meßgerät mit einem solchen Meßaufnehmer und mit einem, insb. lösbar, am Meßaufnehmer fixierten Elektronik-Gehäuse für die Meß- und Betriebselektronik.

Gemäß einer ersten Ausgestaltung der Erfindung ist die Berstscheibe austauschbar.

Gemäß einer zweiten Ausgestaltung der Erfindung ist der Messaufnehmer ein Druckmessaufnehmer und das Sensorelement eine Druckmesszelle. Nach einer Weiterbildung dieser Ausgestaltung ist in einem Flansch ein erster Messleitungsanschluss vorgesehen, über den ein zu messender Druck dem Sensorelement zuführbar ist, und ein hydraulischer Widerstand des ersten Messleitungsanschlusses ist größer als ein hydraulischer Widerstand der geöffneten Überdruckschutzvorrichtung. Gemäß einer anderen Weiterbildung dieser Ausgestaltung der Erfindung ist in den jeweils ersten Messleitungsanschluss eine Drossel mit abgestimmtem hydraulischem Widerstand eingesetzt. Alternativ oder in Ergänzung dazu ist an den ersten Messleitungsanschluss eine Druckzufuhrleitung anschließbar, und in einem zweiten Messleitungsanschluss ist die Überdruckschutzvorrichtung integriert. Ferner kann in dem ersten Messleitungsanschluss ein Strömungswächter vorgesehen sein, der den ersten Messleitungsanschluss bei einem erhöhten Volumendurchsatz durch den ersten Messleitungsanschluss hindurch verschließt.

Gemäß einer dritten Ausgestaltung der Erfindung ist das Sensorelement durch das Anschlusselement hindurch elektrisch anschließbar. Gemäß einer Weiterbildung dieser Ausgestaltung der Erfindung weist der Messaufnehmer eine erste Dichtung auf, die einen Innenraum Anschlusselements gegenüber einem Innenraum des Messaufnehmers abdichtet, und eine zweite Dichtung auf, die den Innenraum des Anschlusselements gegenüber darauf montierbaren Bauteilen abdichtet, wobei die Überdruckvorrichtung im Anschlusselement zwischen der ersten und der zweiten Dichtung angeordnet ist.

Gemäß einer vierten Ausgestaltung der Erfindung ist das Anschlußelement hals- und/oder Stutzenförmig ausgebildet, und ist die Überdruckschutzvorrichtung so im Anschlusselement angeordnet, daß der Überdruck im Meßaufnehmergehäuse durch Ablassen überschüssigen Medium seitlich aus dem Anschlußelement abgebaut wird.

Gemäß einer fünften Ausgestaltung der Erfindung ist das Messaufnehmergehäuse ein Mantelrohr eines Durchflussmessgeräts in dem ein Messrohr verläuft.

Ein Vorteil der Erfindung besteht darin, dass die Überdruckschutzvorrichtung unmittelbar in einem Anschlusselement des Messaufnehmers angeordnet ist. Dadurch kann die Überdruckschutzvorrichtung optimal an die Gegebenheiten des Messaufnehmers angepasst werden. Eine irreversible Schädigung der Bauteile des Messaufnehmers ist hierdurch auch bei Störfällen ausgeschlossen.

Ein weiterer Vorteil besteht darin, dass das den Überdruck bewirkende Medium bei einem Ansprechen der Überdruckschutzvorrichtung an einer genau definierten Stelle in der unmittelbaren Umgebung des Messaufnehmers austritt.

Die Erfindung und weitere Vorteile werden nun anhand der Figuren der Zeichnung, in denen drei Ausführungsbeispiele dargestellt sind, näher erläutert. Gleiche Elemente sind in den Figuren mit den gleichen Bezugszeichen versehen.
- Fig. 1 zeigt: eine Ansicht eines Differenzdrucktransmitters mit einem erfindungsgemäßen Messaufnehmer;
- Fig. 2 zeigt: eine Ansicht des Messaufnehmergehäuses und der Anschlusselemente von Fig. 1;
- Fig. 3 zeigt: eine Ansicht eines Anschlusselements des Messaufnehmers von Fig. 1;
- Fig. 4 zeigt: einen Längsschnitt durch das Messaufnehmergehäuse von Fig. 1 und ein darin angeordnetes Sensorelement;
- Fig. 5 zeigt: eine teilweise geschnittene Ansicht einer Berstscheibe;
- Fig. 6 zeigt: einen Schnitt durch die Berstscheibe in Höhe der Ablassbohrungen;
- Fig. 7 zeigt: eine Drossel;
- Fig. 8 zeigt: einen Strömungswächter;
- Fig. 9 zeigt: eine teilweise geschnittene Ansicht eines Durchflussmessaufnehmers;
- Fig. 10: zeigt einen Schnitt durch die Berstscheibe von Fig. 8;
- Fig. 11: zeigt einen Schnitt durch die Berstscheibe von Fig. 8 in Höhe der Ablassöffnungen; und
- Fig. 12: zeigt eine teilweise geschnittene Ansicht eines Durchflussmessaufnehmers mit einem Anschlusselement mit zwei Dichtungen.

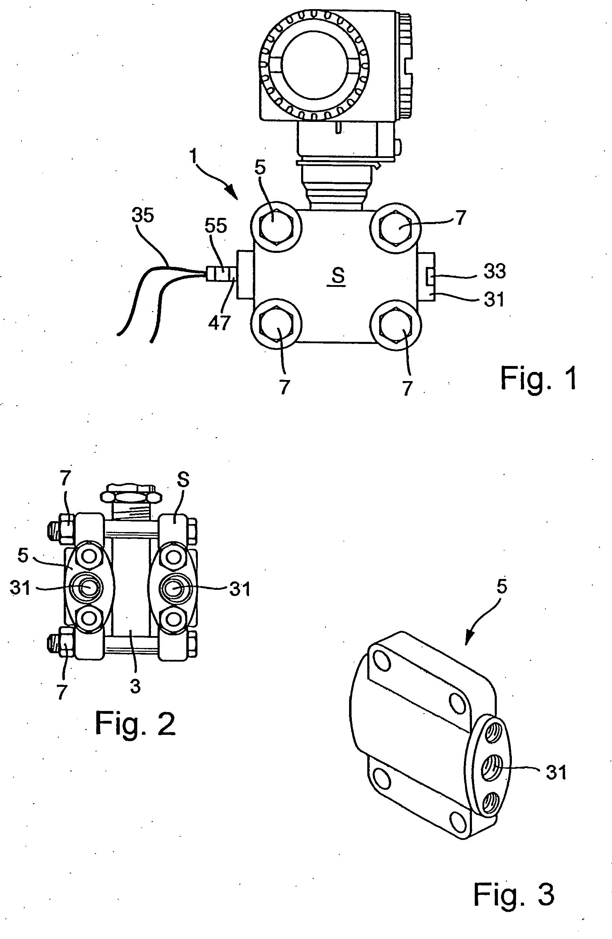

In Fig. 1 ist ein erstes Ausführungsbeispiel eines erfindungsgemäßen Meßgeräts der Prozeßmeßtechnik mit einem Messaufnehmergehäuse 1 und einem daran fixierten Elektronik-Gehäuse 75 für eine - hier nicht dargestellte - Meß- und Betriebselektronik des Meßgeräts dargestellt. Bei dem in Fig. 1 gezeigten Ausführungsbeispiel handelt es sich um ein Druckmessgerät, z.B. ein Differenzdruckmeßgerät oder eine Absolutdruckmeßgerät. Alternativ dazu kann es sich bei dem erfindungsgemäßen Meßgeräts beispielsweise aber auch um ein mit elektromagnetischen Mikrowellen oder mit Ultraschallwellen arbeitendes Füllstandsmeßgerät oder um einen Füllstandsgrenzschalter oder auch ein anderes, als Sonde in eine Wand eines Behälters, insb. eines Tanks, eingesetztes Meßgerät der Prozeßmeßtechnik handeln.

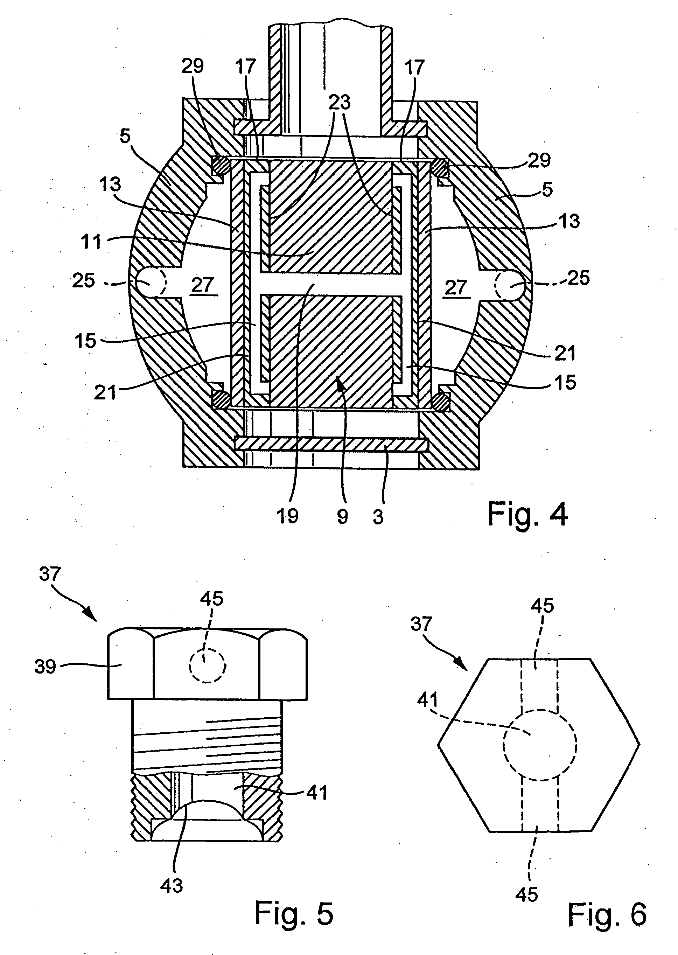

Das Messaufnehmergehäuse 1 umfasst einen metallischen Zylinder 3, der zu jeder Seite von einem Anschlusselement 5 abgeschlossen ist. In dem hier dargestellten Ausführungsbeispiel sind die Anschlusselemente 5 als Flansche ausgebildet. Fig. 2 zeigt eine Ansicht des Messaufnehmergehäuses 1 und der Anschlusselemente 5. Fig. 3 zeigt eine Ansicht eines Anschlusselements 5. Der Zylinder 3 ist durch vier durch die Anschlusselemente 5 hindurch führende Bolzenschrauben 7 zwischen den Anschlusselementen 5 eingespannt und bildet einen Innenraum des Messaufnehmergehäuses 1. Im Inneren des Messaufnehmergehäuses 1 ist ein Sensorelement 9 zur Aufnahme einer physikalischen Messgröße, hier eines Differenzdrucks angeordnet. Bei dem dargestellten Ausführungsbeispiel ist das Sensorelement 9 eine Druckmesszelle, die im Inneren des Messaufnehmergehäuses 1 zwischen den beiden Anschlusselementen 5 eingespannt ist. Fig. 4 zeigt einen Längsschnitt durch das Messaufnehmergehäuse von Fig. 1. Bei der Druckmesszelle handelt es sich um eine kapazitive keramische Differenzdruckmesszelle. Die Differenzdruckmesszelle weist einen im wesentlichen vollzylindrischen Grundkörper 11 auf, auf dessen kreisförmigen Stirnflächen jeweils eine vom Grundkörper 11 beabstandet angeordnete Membran 13 vorgesehen ist. Der Grundkörper 11 und die Membranen 13 bestehen aus Keramik. Die Membranen 13 sind mit dem Grundkörper 11 an deren Rändern unter Bildung jeweils einer Messkammer 15 mittels einer Fügestelle 17 druckdicht und gasdicht verbunden. Die beiden Messkammern 15 sind durch eine durch den Grundkörper 11 hindurch führende Bohrung 19 miteinander verbunden. Die beiden Messkammern 15 und die Bohrung 19 sind mit einer druckübertragenden, möglichst inkompressiblen Flüssigkeit, z.B. einem Silikonöl, gefüllt. Die Membranen 13 sind druckempfindlich, d.h. ein auf sie einwirkender Druck p bewirkt eine Auslenkung der jeweiligen Membran 13 aus deren Ruhelage.

Die Differenzdruckmesszelle weist einen Wandler zur Umwandlung der druckabhängigen Auslenkung der Membranen 13 in eine elektrische Messgröße auf.

In dem dargestellten Ausführungsbeispiel eines kapazitiven Differenzdrucksensors umfasst der Wandler jeweils eine auf einer Innenseite jeder Membran 13 angeordnete Elektrode 21 und mindestens eine auf einer gegenüberliegenden der jeweiligen Membran 13 zugewandten Außenseite des Grundkörpers 11 angeordnete Gegenelektrode 23.

Die Kapazitäten der durch die Elektroden 21 und die Gegenelektroden 23 gebildeten Kondensatoren werden durch die Auslenkungen der Membranen 13 bestimmt und sind somit ein Maß für den auf den Differenzdrucksensor einwirkenden Differenzdruck.

Die Elektroden 21 liegen vorzugsweise über die Fügestellen 17 an Masse und die Gegenelektroden 23 werden durch den Grundkörper 11 hindurch kontaktiert und an eine in den Figuren nicht dargestellte Messschaltung angeschlossen, die die Kapazitäten in ein vom Differenzdruck abhängiges Ausgangssignal umwandelt und einer weiteren Auswertung und/oder Verarbeitung zur Verfügung stellt.

Die beiden Anschlusselemente 5 sind im wesentlichen Scheiben mit nahezu quadratischem Querschnitt, die den Differenzdrucksensor derart einfassen, dass die Membranen 13 jeweils zu einer quadratischen Stirnfläche eines Anschlusselementes 5 weisen. Jedes Anschlusselement 5 weist eine durchgehende Bohrung 25 auf, durch die jeweils einer der beiden Drücke, deren Differenz gemessen werden soll, auf eine der Membranen 13 einwirkt. An deren der jeweiligen Membran 13 zugewandten Seite münden die Bohrungen 25 in durch Ausnehmungen in den Anschlusselementen 5 gebildeten Kammern 27. Die Kammern 27 werden an deren Rand auf den Stirnflächen der Anschlusselementen 5 durch Auflagen eingefasst, auf denen die Membranen 13 mit einem äußeren druckunempfindlichen Rand unter Zwischenfügung mindestens einer Dichtung 29, z.B. eines O-Rings aus einem Elastomer, aufliegen. Vorzugsweise sind Nuten zur Aufnahme der Dichtungen 29 vorgesehen.

Anschlusselemente 5 von handelsüblichen Differenzdruckmessaufnehmern weisen heute standardmäßig einen ersten und einen diesem gegenüberliegenden identischen zweiten Messleitungsanschluss 31 auf. Diese münden jeweils auf einer Stirnfläche des Flansches 5 mit rechteckigem Querschnitt und führen unmittelbar zu der Bohrung 25, über die die Messleitungsanschlüsse 31 mit den jeweiligen Kammern 27 in Verbindung stehen.

Bei einer Messung eines Differenzdrucks von gasförmigen Medien werden die ersten Messleitungsanschlüsse 31, über die die jeweilige Druckzufuhr erfolgt oben angeordnet. Die jeweils gegenüberliegenden nach unten weisenden zweiten Messleitungsanschlüsse 31 desselben Anschlusselementes 5 werden bei handelsüblichen Differenzdruckmessaufnehmern verschlossen. Über sie kann bei Bedarf im Messaufnehmer kondensierte Flüssigkeit abgelassen werden.

Bei einer Messung eines Differenzdrucks von flüssigen Medien werden die ersten Messleitungsanschlüsse 31 jedes Anschlusselementes 5, über die die jeweilige Druckzufuhr erfolgt, unten angeordnet. Die jeweils gegenüberliegenden nach oben weisenden zweiten Messleitungsanschlüsse 31 werden bei handelsüblichen Differenzdruckmessaufnehmern verschlossen. Über sie kann bei Bedarf, z.B. durch eine in den Messleitungsanschluss 31 eingeschraubte Belüftungsschraube eine Entlüftung des Messaufnehmers erfolgen.

Erfindungsgemäß ist in den Anschlusselementen 5 jeweils eine Überdruckschutzvorrichtung 33 eingesetzt, die mit einem Lumen des Messaufnehmergehäuses kommuniziert und die dazu dient, im Falle eines Überdrucks im Messaufnehmer einen Druckausgleich mit einer Umgebung des Messaufnehmers herbeizuführen. Vorzugsweise ist an dem jeweils ersten Messleitungsanschluss 31 eine Druckzufuhrleitung 35 anschließbar und in dem zweiten Messleitungsanschluss 31 die Überdruckschutzvorrichtung 33 integriert.

Die Überdruckschutzvorrichtung 33 ist vorzugsweise eine Berstscheibe 37 oder ein Überfastventil.

Es sind Überlastventile im Handel erhältlich, die mittels eines Außengewindes unmittelbar in standardmäßig bei Messleitungsanschlüssen 31 von Anschlusselementen 5 von Differenzdruckmessaufnehmern vorgesehene Bohrungen mit Innengewinden einschraubbar sind. Diese Überlastventile werden häufig auch als Sicherheitsventile bezeichnet. Sie öffnen bei Überschreiten eines ventilspezifischen vorgegebenen Drucks automatisch und verschließen sich selbsttätig wieder, wenn der auf sie einwirkende Druck unter diesen vorgegebenen Druck abfällt.

Da sie eingeschraubt werden, können sie jederzeit, z.B. zur Entlüftung bzw. zur Entwässerung des Messaufnehmers, entfernt und anschließend wieder eingesetzt werden.

Alternativ kann eine Berstscheibe 37 als Überdruckschutzvorrichtung 33 eingesetzt werden. Fig. 5 zeigt eine teilweise geschnittene Ansicht einer Berstscheibe 37. Sie hat die Form einer Schraube mit einem Schraubenkopf 39. Vorzugsweise werden die Berstscheiben 37 in die standardmäßig vorhandenen Bohrungen der Messleitungsanschlüsse 31 der Anschlusselemente 5 eingeschraubt. Im Inneren der Schraube verläuft axial eine Bohrung 41, die an einem vom Schraubenkopf 39 abgewandten Ende der Schraube mündet. Dieses Ende ist mittels einer Membran 43 verschlossen. Im Schraubenkopf 39 sind Ablassbohrungen 45 vorgesehen. Fig. 6 zeigt einen Schnitt durch die Berstscheibe 37 in Höhe der Ablassbohrungen 45. Diese führen von der axialen Bohrung 41 radial nach außen und bilden eine Verbindung von der axialen Bohrung 41 zur Umgebung des Messaufnehmers. Überschreitet ein auf die Membran 43 einwirkender Druck einen vorgegebenen Druck wird die Membran 43 zerstört. Über die axiale Bohrung 41 und die Ablassbohrungen 45 erfolgt dann ein Druckausgleich mit der Umgebung des Messaufnehmers.

Die Berstscheibe 37 ist gemäß einer Ausgestaltung der Erfindung austauschbar. Bei dem beschriebenen Ausführungsbeispiel erfolgt dies auf einfache Weise, indem die Berstscheibe 37, z.B. im Anschluss an einen oben beschriebenen Überlastfall, aus dem Messleitungsanschluss 31 herausgeschraubt wird und durch eine neue Berstscheibe 37 ersetzt wird.

Der vorgegebene Druck, bei dem die Überdruckschutzvorrichtungen 33 öffnen ist beispielsweise gleich dem zweifachen des Nenndrucks. Sobald ein auf die Überdruckschutzvorrichtung 33 einwirkender Druck auf diesen vorgegebenen Druck ansteigt öffnet sich die Überdruckschutzvorrichtung 33 und das Medium strömt ab. Nach einem Absinken des Druckes unter den vorgegebenen Druck schließt sich das Überdruckventil, bzw. die Berstscheibe 37 wird ausgewechselt. Eine mechanische Schädigung der Bauteile des Messaufnehmers ist hierdurch ausgeschlossen.

Ein Vorteil des erfindungsgemäßen Messaufnehmers besteht darin, dass die Überdruckschutzvorrichtungen 33 unmittelbar in den Flanschen 5 des Messaufnehmers angeordnet sind. Sie sind unmittelbarer Bestandteil des Messaufnehmers und können entsprechend optimal an die Gegebenheiten des jeweiligen Messaufnehmers angepasst werden. Wie anhand des Ausführungsbeispiels beschrieben, können die Überdruckschutzvorrichtungen 33 bei Differenzdruckmessaufnehmern unmittelbar in standardmäßig in den Anschlusselementen 5 vorhandene Bohrungen eingesetzt werden. Dies bietet den Vorteil, dass kein zusätzlicher Aufwand erforderlich ist und Standardbauteile eingesetzt werden können.

Ein weiterer Vorteil besteht darin, dass keine Änderung, besondere Einbauten oder Umbauten am Einsatzort erforderlich sind. Da die Überdruckschutzvorrichtungen 33 integraler Bestandteil des Messaufnehmers sind, sind Fehler, wie z.B. eine fehlerhafte Dimensionierung oder sogar eine fehlende Überdruckschutzvorrichtung, ausgeschlossen.

Vorzugsweise ist der Messaufnehmer so ausgelegt, dass ein hydraulischer Widerstand der ersten Messleitungsanschlüsse 31, über den die zu messenden Drücke dem Sensorelement 9 zuführbar sind, größer ist, als ein hydraulischer Widerstand der geöffneten Überdruckschutzvorrichtung 33.

Dies kann beispielsweise durch eine entsprechende Anpassung der geometrischen Abmessungen der Überdruckschutzvorrichtungen 33, der Messleitungsanschlüsse 31 und der Druckzufuhrleitungen 35 erfolgen.

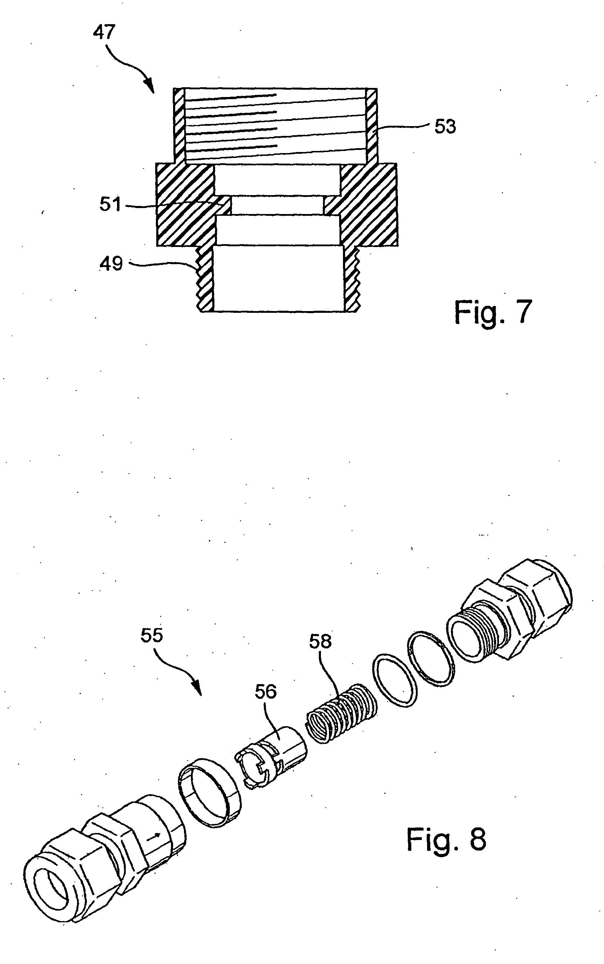

Alternativ kann in den ersten Messleitungsanschlüssen 31 eine Drossel 47 mit abgestimmtem hydraulischem Widerstand eingesetzt werden. Fig. 7 zeigt einen Längsschnitt eines Ausführungsbeispiels für eine Drossel 47. Die Drossel 47 ist ein im wesentlichen zylindrisches Einschraubstück, das drei Abschnitt aufweist. Ein erster Abschnitt ist ein Zylinder 49 mit einem Außengewinde, der in die Bohrung des ersten Messleitungsanschlusses 31 einschraubbar ist. Daran schließt ein zweiter ebenfalls im wesentlichen hohlzylindrischer Abschnitt an, der innen eine sich radial nach innen erstreckende ringförmig umlaufende Schulter 51 aufweist. Die Schulter 51 verengt eine lichte Weite des Innenraums. Je geringer diese lichte Weite ist, um so größer ist der hydraulische Widerstand der Drossel 47. An den zweiten Abschnitt schließt ein dritter hohlzylindrischer Abschnitt 53 mit einem Innengewinde an. Dieser Abschnitt 53 ist vorzugsweise gemäß den standardisierten Abmessungen für Messleitungsanschlüsse ausgebildet, so dass die Druckzufuhrleitung 35 unmittelbar an die Drossel 47 anschließbar ist.

Dadurch, dass der hydraulische Widerstand der Messleitungsanschlüsse 31, über den die zu messenden Drücke dem Sensorelement 9 zuführbar sind, größer ist, als der hydraulische Widerstand der geöffneten Überdruckschutzvorrichtung 33 ist auch bei extrem schnellen Druckanstiegen gewährleistet, dass die Überdruckschutzvorrichtung 33 schneller öffnet, als ein über den vorgegebenen Druck hinausgehender weiterer Druckanstieg im Messaufnehmer auftreten kann.

Vorzugsweise ist in den ersten Messleitungsanschlüssen 31, über die die zu messenden Drücke dem Sensorelement 9 zuführbar sind, ein Strömungswächter 55 vorgesehen. Strömungswächter 55 sind mechanische Einrichtungen, die den Messleitungsanschluss 31 bei einem erhöhten Volumendurchsatz durch den Messleitungsanschluss 31 hindurch verschließen.

Strömungswächter 55 besitzen in der Regel eine zylindrische Kammer mit einem schräg verlaufenden Seitenkanal. Bei einer Überschreitung einer bestimmten Durchflussrate wird der Strömungskörper angehoben und verschließt den Messleitungsanschluss 31. Es sind Strömungswächter im Handel erhältlich, bei denen der Strömungskörper durch seine Gewichtskraft bis zu einem bestimmten Druck in dessen Ruhelage gehalten wird. Da die Funktionsweise dieser Strömungswächter lageabhängig ist, ist ein senkrechter Einbau erforderlich. Einige handelsübliche Strömungswächter sind mit einer Rückstellfeder ausgestattet, die den Strömungskörper in dessen Ruhelage hält. Bei diesen Strömungswächtern wird die Rückstellkraft schwerkraftunabhängig durch die Rückstellfeder aufgebracht. Sie funktionieren daher unabhängig von deren Einbaulage. Fig. 8 zeigt eine Explosionsdarstellung eines Ausführungsbeispiel eines solchen handelsüblichen Strömungswächters der Firma Swagelock mit einem Strömungskörper 56 und einer Rückstellfeder 58.

Für den Fall, dass eine Überdruckschutzvorrichtung 33 öffnet, verschließt der zugeordnete Strömungswächter 55 den zugehörigen ersten Messleitungsanschluss 31 und verhindert so ein Abströmen des Mediums in die Umgebung des Messaufnehmers.

Anhand der Figuren 1 bis 8 wurde ein Differenzdruckmessaufnehmer beschrieben. Auf analoge Weise ist die Erfindung natürlich auch bei Druckmessaufnehmern, die nur einen Druck und nicht eine Differenz zwischen zwei Drücken erfassen, einsetzbar. Diese weisen dann selbstverständlich nur ein Anschlusselement, eine Druckzufuhr und eine Überdruckschutzvorrichtung auf.

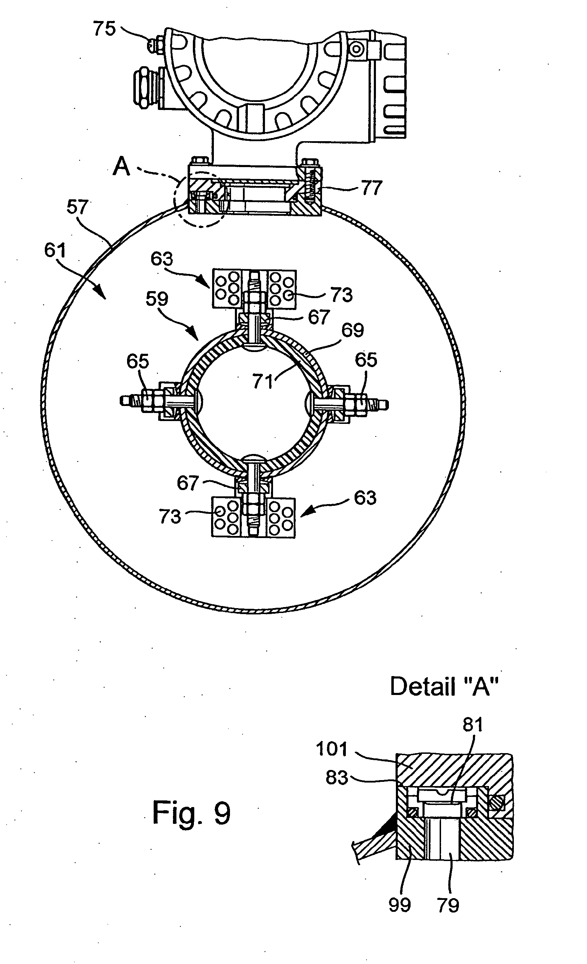

Fig. 9 zeigt ein weiteres Ausführungsbeispiel eines erfindungsgemäßen Messaufnehmers. Bei dem in Fig. 9 dargestellten Ausführungsbeispiel handelt es sich um einen Durchflussmessaufnehmer. Dargestellt ist ein Messaufnehmer eines magnetisch-induktiven Durchflussmessgeräts. Mittels eines magnetisch-induktiven Durchflussmessaufnehmers ist ein Volumendurchfluss einer elektrisch leitfähigen Flüssigkeit messbar. Die Erfindung ist aber genauso in Verbindung mit anderen Durchflussmessgeräten, z.B. Vortex-, Coriolis-, Ultraschall-Durchflußmeßgeräten oder thermischen Durchflussmessern einsetzbar.

Der Messaufnehmer weist ein Messaufnehmergehäuse 57 auf. Das Messaufnehmergehäuse 57 ist ein Mantelrohr, in dem ein Messrohr 59 verläuft. Im Betrieb durchströmt die Flüssigkeit das Messrohr 59.

In dem Messaufnehmergehäuse 57 ist ein Sensorelement 61 angeordnet. Dieses umfasst eine Vorrichtung 63 zur Erzeugung eines Magnetfeldes im Inneren des Messrohres 59.

Die Vorrichtung 63 ist beispielsweise, wie in Fig. 9 dargestellt, eine Magnetkreisanordnung. Diese umfasst Elektroden 67, die durch ein äußeres Trägerrohr 69 des Messrohres 59 hindurch in einen Liner 71 stirnseitig und formschlüssig eingelassen sind. Die Elektroden 67 sind von Spulen 73 umgeben. Im Betrieb wird mittels einer entsprechenden, hier ebenfalls nicht dargestellten, an die Magnetkreisanordnung angekoppelten und im Elektronik-Gehäuse 75 untergebrachten Meß- und Betriebs-Elektronik ein Magnetfeld von möglichst hoher Dichte erzeugt, das die Flüssigkeit senkrecht zu deren Strömungsrichtung durchsetzt und sich im wesentlichen außerhalb der Flüssigkeit schließt. Das Messrohr 59 besteht aus einem nichtferromagnetischen Material. Aufgrund der Bewegung der freien Ladungsträger der Flüssigkeit im Magnetfeld wird nach dem magneto-hydrodynamischen Prinzip im Messvolumen ein elektrisches Feld bestimmter Stärke erzeugt, das senkrecht zum Magnetfeld und senkrecht zur Strömungsrichtung der Flüssigkeit verläuft.

Das Sensorelement 61 umfasst weiter zwei in Richtung des elektrischen Feldes voneinander beabstandete Elektroden 65, über die die in die Flüssigkeit induzierte Spannung abgreifbar ist. Die Elektroden 65 sind ebenfalls an die erwähnte Meß- und Betriebs-Elektronik angeschlossen. Die induzierte Spannung ist ein Maß für den Volumendurchfluss durch das Messrohr 59.

Auf dem Messaufnehmergehäuse 57 ist ein - hier hals- und/oder stutzenförmiges - Anschlusselement 77 vorgesehen, durch das hindurch das Sensorelement 61 an die zugehörige Meßgerät-Elektronik elektrisch anschließbar ist. Das Elektronik-Gehäuse 75 ist, wie auch bei dem in Fig. 1 gezeigten Ausführungsbeispiel, mittels des Anschlusselements 77 praktisch direkt auf dem Meßaufnehmer-Gehäuse 57 befestigt. Das Anschlusselement 77 kommuniziert insoweit sowohl mit dem Meßaufnehmer-Gehäuse 57 als auch mit dem Elektronik-Gehäuse 75. Das Elektronik-Gehäuse 75 dient wie bereits erwähnt, der Aufnahme der in Fig. 9 gleichermaßen nicht dargestellten Meßgerät-Elektronik. Elektrische Anschlussleitungen führen durch das Anschlusselement 77 hindurch in das Messaufnehmergehäuse 57 und können beispielsweise in im Anschlußelement eingebrachte Dichtungsmaterialien, beispielsweise Kunststoff und/oder Glas, entsprechend eingebettet sein.

In dem Anschlusselement 77 ist wiederum eine Überdruckschutzvorrichtung 33, insb. eine Berstscheibe 85 oder eine Überlastventil, integriert. Genau wie bei dem zuvor anhand der Figuren 1 bis 8 beschriebenen Ausführungsbeispiel dient die Überdruckschutzvorrichtung 33 dazu, im Falle eines Überdrucks im Messaufnehmer einen Druckausgleich mit einer Umgebung des Messaufnehmers herbeizuführen. Dies verhindert ein Bersten des Mantelrohrs und alle damit möglicherweise verbundenen Personen- und Sachschäden.

Die Überdruckschutzvorrichtung 33 ist in einer Ausnehmung im Anschlusselement 77 angeordnet. Die Ausnehmung umfasst eine zylindrische Bohrung 79, die in einem Innenraum des Meßaufnehmer-Gehäuses 57 mündet. Weiter umfasst sie eine Kammer 81, die auf einer vom Meßaufnehmer-Gehäuse 57 abgewandten Seite her an die zylindrischen Bohrung 79 anschließt. Von der Kammer 81 führt ein zwischen den beiden Hälften des Anschlusselements 77 bestehender Spalt 83 radial aus dem Anschlusselement 77 heraus. Über diesen Spalt 83 steht die Kammer 81 in Verbindung mit der Umgebung des Messaufnehmers. Bei geöffneter Überdruckschutzvorrichtung 33 erfolgt der Druckausgleich mit der Umgebung durch diesen Spalt 83 hindurch.

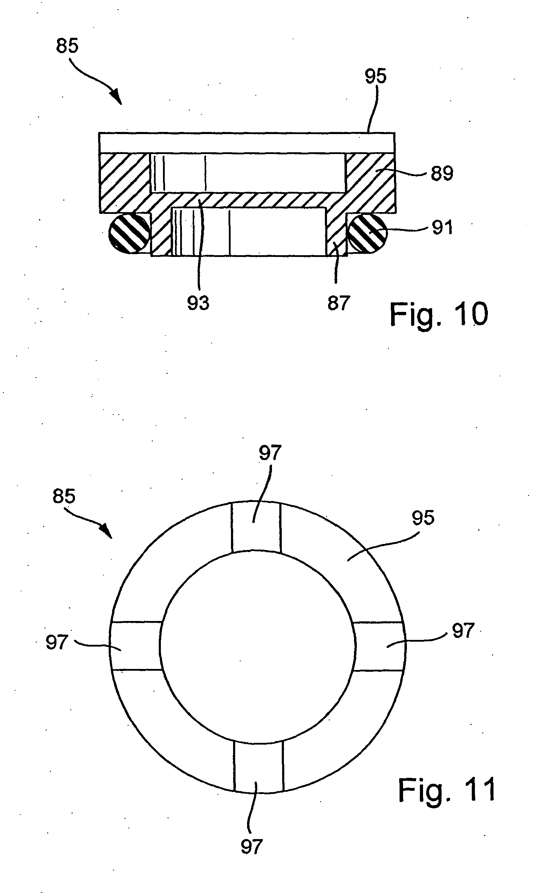

In dem dargestellten Ausführungsbeispiel ist die Überdruckschutzvorrichtung 33 eine Berstscheibe 85. Fig. 10 zeigt einen Schnitt durch die Berstscheibe 85. Die Berstscheibe 85 weist einen hohlzylindrischen Abschnitt 87 auf, an den sich ein weiterer hohlzylindrischer Abschnitt 89 anschließt. Letzterer weist einen größeren Außendurchmesser als der hohlzylindrische Abschnitt 87 auf. Dort, wo die beiden Abschnitte 87, 89 aneinander angrenzen besteht eine ringförmig umlaufende Auflagefläche. Auf der Auflagefläche liegt eine Dichtung 91, z.B. ein O-Ring aus einem Elastomer auf. Im eingebauten Zustand ist die Dichtung 91 zwischen der Auflagefläche und einer ringförmigen an die Bohrung 79 angrenzenden durch die Kammer 81 gebildeten Absatzfläche eingespannt. Der Innenraum der Berstscheibe 85 ist durch eine kreisscheibenförmige Membran 93 verschlossen. Die Berstscheibe 85 liegt mit einer ringscheibenförmigen Stirnfläche 95 auf einer dem Messaufnehmer zugewandten Innenwand der Kammer 81 auf. Der hohlzylindrische Abschnitt 89 weist auf einer dem Meßaufnehmer abgewandten Seite der Membran 93 radial nach außen führende Ablassöffnungen 97 auf, die sich im eingebauten Zustand in Höhe des Spaltes 83 befinden. Fig. 11 zeigt eine Ansicht der im eingebauten Zustand messaufnehmer-abgewandten Stirnfläche 95 der Berstscheibe 85. Die Ablassöffnungen 97 sind in dem dargestellten Ausführungsbeispiel Nuten, die zu dieser Stirnfläche 95 hin offen sind.

Das Anschlusselement 77 besteht aus einem Metall, z.B. einem Stahl oder Edelstahl. Die Berstscheibe 85 besteht vorzugsweise aus einem spröden Kunststoff, z.B. aus Polypropylenethylen (PPE).

Überschreitet ein auf die Membran 93 einwirkender Druck einen vorgegebenen Druck wird die Membran 93 zerstört und gibt den Weg durch die Berstscheibe 85 hindurch zu den Ablassöffnungen 97 frei. Von dort erfolgt über den Spalt 83 ein Druckausgleich mit der Umgebung des Messaufnehmers.

Die Berstscheibe 85 ist vorzugsweise austauschbar. Bei dem beschriebenen Ausführungsbeispiel besteht das Anschlusselement 77 hierzu aus zwei aufeinander geschraubten nahezu ringscheibenförmigen Elementen 99, 101. In einem der Elemente 99 befindet sich die Bohrung 79 und die Kammer 81. Die Kammer 81 wird auf deren dem Meßaufnehmer abgewandten Seite von dem anderen Element 101 verschlossen.

Während es bei handelsüblichen Durchflußmessaufnehmern aus Sicherheitsgründen erforderlich sein kann das Messaufnehmergehäuse 57 druckfest auszubilden, kann auf diese kostenintensive Maßnahme bei dem erfindungsgemäßen Messaufnehmer verzichtet werden.

Im Normalbetrieb steht der Innenraum des Messaufnehmergehäuses 57 bei Durchflussmessaufnehmern nicht unter Druck. Im Normalbetrieb ist eine druckfeste Ausführung des Messaufnehmergehäuses 57 bei Durchflussmessaufnehmern nicht erforderlich. Bei einem Störfall, z.B. bei einer Beschädigung des Messrohrs 59, kann ein Druckanstieg im Inneren des Messaufnehmergehäuses 57 auftreten. Überschreitet dieser Druck einen vorgegebenen Druck, so öffnet die Überdruckschutzvorrichtung 33. Es findet ein Druckausgleich mit der Umgebung statt, so dass ein weiterer Druckanstieg über den vorgegebenen Druck hinaus nicht eintreten kann. Ein Zerbersten des Messaufnehmergehäuses 57 ist dadurch ausgeschlossen.

Der vorgegebene Druck wird bei dem beschriebenen Ausführungsbeispiel durch die Berstfestigkeit der Membran 93 festgelegt. Diese ist durch Dicke und Werkstoff der Membran 93 einstellbar. Der vorgegebene Druck kann damit optimal an die Gegebenheiten des Messaufnehmers, z.B. eine mechanische Belastbarkeit des Messaufnehmergehäuses 57, angepasst werden.

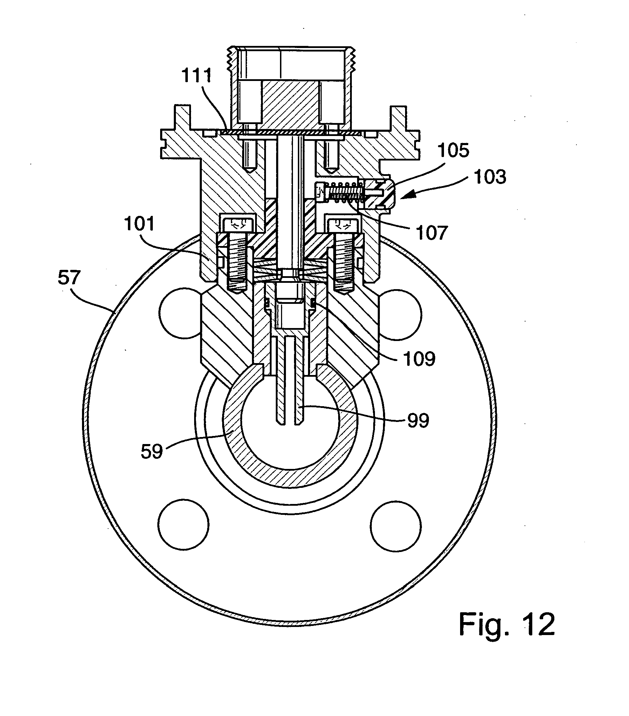

Fig. 12 zeigt ein weiteres Ausführungsbeispiel eines Durchflussmessaufnehmers. Auch hier ist das Messaufnehmergehäuse 57 ein Mantelrohr in dem ein Messrohr 59 verläuft. Es ist ein Sensorelement 99 vorgesehen, das in dem hier gewählten Ausführungsbeispiel in das Messrohr 59 hinein ragt. Dabei können die oben genannten Durchflussmessprinzipien zum Einsatz kommen. Weiter ist ein Anschlusselement 101 vorgesehen, das das Messaufnehmergehäuse 57 abschließt und in dem eine Überdruckschutzvorrichtung 103 integriert ist, die dazu dient, im Falle eines Überdrucks im Messaufnehmer einen Druckausgleich mit einer Umgebung des Messaufnehmers herbeizuführen. Als Überdruckschutzvorrichtung 103 eignet sich z.B. ein Überdruckventil oder eine Berstscheibe. In dem dargestellten Ausführungsbeispiel ist ein Überdruckventil vorgesehen, bei dem ein Stopfen 105 eine Bohrung durch eine Außenwand des Anschlusselement 101 verschließt und dort mittels einer gegen eine Spannfeder gelagerten Schraube 107 fixiert ist. Übersteigt der Druck im Inneren des Anschlusselements 101 einen vorgegebenen Wert, so schlägt die Überdruckschutzvorrichtung 103 an und es erfolgt ein Druckausgleich durch die Bohrung hindurch.

Durch das Anschlusselement 101 hindurch ist das Sensorelement 99 elektrisch anschließbar. Genau wie bei dem in Fig. 9 dargestellten Ausführungsbeispiel kann auf das Anschlusselement 101 beispielsweise ein in Fig. 12 nicht dargestelltes Gehäuse zur Aufnahme einer Elektronik montiert werden, oder das Anschlusselement 101 kann als reine Durchführung genutzt und an weitere Verbindungsleitungen angeschlossen werden.

Vorzugsweise sind zwei Dichtungen 109, 111 vorgesehen, von denen eine erste Dichtung 109 einen Innenraum Anschlusselements 101 gegenüber einem Innenraum des Messaufnehmers abdichtet, und von denen eine zweite Dichtung 111 den Innenraum des Anschlusselements 101 gegenüber darauf montierbaren Bauteilen, z.B. dem oben genannten Gehäuse oder Anschlussleitungen abdichtet. Die Überdruckvorrichtung 103 ist im Anschlusselement 101 zwischen der ersten und der zweiten Dichtung 109, 111 angeordnet. Diese Anordnung bietet den Vorteil, dass ein Eindringen eines den Überdruck bewirkenden Mediums in an das Anschlusselement 101 angeschlossene Bauteile praktisch nicht mehr auftritt. Im normalen Betrieb ist der Innenraum des Anschlusselements 101 durch die erste Dichtung 109 abgedichtet. Erst wenn diese Dichtung 109 versagt kann ein Medium in den Innenraum des Anschlusselements 101 eintreten, wo es dann einen Druckanstieg bewirkt, der die Überdruckschutzvorrichtung 103 auslöst. Es findet ein Druckausgleich mit der unmittelbaren Umgebung des Anschlusselements 101 und des Messaufnehmers statt, während dem die an das Anschlusselement 101 anschließbaren Bauteile durch die zweite Dichtung 111 geschützt sind. Hierdurch wird vermieden, dass sich das Medium über an das Anschlusselement 101 angeschlossene Bauteile unkontrolliert ausbreiten kann und womöglich in Bereichen ankommt, in denen keinerlei Sicherheitsvorkehrungen getroffen wurden.

Aufgrund seiner hohen Sicherheit kann das erfindunsgemäße Meßgerät in nahezu allen Bereichen der industriellen Mess- und Automatisierungstechnik eingesetzt werden. Gleichermaßen kann die Erfindung ohne weiteres auch für Meßgeräte mit anderen Meßprinzipien angewendet werden.

## Patentansprüche

1. Messaufnehmer mit
- einem Messaufnehmergehäuse (1, 57),
- einem in dem Messaufnehmer angeordneten Sensorelement (9, 61, 99),
- mindestens einem am Messaufnehmergehäuse (1, 57) fixierten Anschlusselement (5, 77, 101), und
- einer im Anschlusselement (5, 77, 101) angeordneten Überdruckschutzvorrichtung (33, 103), insb. einer Berstscheibe (37, 85) und/oder einem Überlastventil, die mit einem Lumen des Messaufnehmergehäuse kommuniziert und die dazu dient, im Falle eines Überdrucks im Messaufnehmer einen Druckausgleich mit einer Umgebung des Messaufnehmers herbeizuführen.

2. Messaufnehmer nach Anspruch 1, wobei die Berstscheibe (37, 85) austauschbar ist.

3. Messaufnehmer nach Anspruch 1, wobei der Messaufnehmer ein Druckmessaufnehmer und das Sensorelement (9) eine Druckmesszelle ist.

4. Messaufnehmer nach Anspruch 3, wobei
- in jedem Anschlusselement (5) ein erster Messleitungsanschluss (31) vorgesehen ist, über den ein zu messender Druck dem Sensorelement (9) zuführbar ist, und
- ein hydraulischer Widerstand des ersten Messleitungsanschlusses (31) größer ist, als ein hydraulischer Widerstand der geöffneten Überdruckschutzvorrichtung (33).

5. Messaufnehmer nach Anspruch 4, wobei in den ersten Messleitungsanschluss (31) eine Drossel (47) mit abgestimmtem hydraulischem Widerstand eingesetzt ist.

6. Messaufnehmer nach Anspruch 3, wobei
- an den ersten Messleitungsanschluss (31) eine Druckzufuhrleitung (35) anschließbar ist, und
- in einem zweiten Messleitungsanschluss (31) die
Überdruckschutzvorrichtung (33) integriert ist.

7. Messaufnehmer nach Anspruch 3, wobei im ersten Messleitungsanschluss (31) ein Strömungswächter (55) vorgesehen ist, der den ersten Messleitungsanschluss (31) bei einem erhöhten Volumendurchsatz durch den ersten Messleitungsanschluss (31) hindurch verschließt.

8. Messaufnehmer nach Anspruch 1, wobei
das Sensorelement (61, 99) durch das Anschlusselement (77, 101) hindurch elektrisch anschließbar ist.

9. Messaufnehmer nach Anspruch 8,
- der eine erste Dichtung (109) aufweist, die einen Innenraum Anschlusselements (101) gegenüber einem Innenraum des Messaufnehmers abdichtet,
- der eine zweite Dichtung (111) aufweist, die den Innenraum des Anschlusselements gegenüber darauf montierbaren Bauteilen abdichtet,
- wobei die Überdruckvorrichtung (103) im Anschlusselement (101) zwischen der ersten und der zweiten Dichtung (109, 111) angeordnet ist.

10. Messaufnehmer nach Anspruch 1, 8 oder 9, wobei das Messaufnehmergehäuse (57) ein Mantelrohr eines Durchflussmessaufnehmers ist, in dem ein Messrohr (59) verläuft.

11. Messaufnehmer nach einem der vorherigen Ansprüche, wobei das Anschlußelement hals- und/oder Stutzenförmig ausgebildet, und ist die Überdruckschutzvorrichtung so im Anschlusselement angeordnet, daß der Überdruck im Meßaufnehmergehäuse durch Ablassen überschüssigen Medium seitlich aus dem Anschlußelement abgebaut wird.

12. Meßgerät, insb. Durchflußmeßgerät, Druckmeßgerät, Füllstandsmeßgerät und/oder als Füllstandsgrenzschalter, mit einem Meßaufnehmer gemäß einem der vorherigen Ansprüche und mit einem, insb. lösbar, am Meßaufnehmer fixierten Elektronik-Gehäuse für die Meß- und Betriebselektronik.
